# DEMANDE DE BREVET EUROPEEN

(11) **EP 2 574 499 A1**
(43) Date de publication de la demande: **03.04.2013**
(21) Numéro de dépôt: 12186308.8
(22) Date de dépôt: 27.09.2012
(51) Int. Cl.: B60P 1/02, B60P 1/43, B60P 1/64

(54) **Dispositif de plateforme coulissante perfectionnée pour chargement d'objet lourd**

(30) Priorité: 30.09.2011 FR 1158824
(71) Demandeur: PEUGEOT CITROËN AUTOMOBILES SA, 78140 Velizy-Villacoublay (FR)
(72) Inventeur: Mention, Cedric, 93420 Villepinte (FR)

(57) **Abrégé**

Dispositif de plateforme (1) coulissante placée sur le plancher (2) de chargement de la caisse d'un véhicule caractérisé en ce qu'il comprend deux actionneurs (8) aptes à accompagner le déplacement de la plateforme (1) d'une position rétractée sur le plancher (2), à l'intérieur du véhicule vers une position extraite à l'extérieur du véhicule.

L'invention trouve son application dans le domaine des véhicules automobiles.

## Description

La présente invention est relative à une plateforme coulissante robuste permettant de faciliter le chargement d'objets lourds notamment sur des véhicules de type breaks ou utilitaires.

Dans l'état de la technique, nous connaissons le document FR2528774, ce document décrit un équipement d'accès et de sortie par translation et de changement de niveau. L'équipement est plus particulièrement placé à l'arrière d'un véhicule de type breaks ou utilitaire. L'équipement comprend un dispositif ascenseur descenseur et de translation destiné à déplacer une plateforme entre un plan inférieur et un plan supérieur, ces deux plans n'étant pas superposés. A cet effet, la plateforme est portée latéralement par deux bras articulés solidaires de roues dentées qui coopèrent avec des crémaillères fixées sur la structure du véhicule. Les roues sont agencées pour être déplacées sous l'action de moyens d'entraînement en les faisant se déplacer sur les crémaillères et en déplaçant simultanément et angulairement les bras qui entraînent alors par des mouvements combinés la plateforme. La plateforme est ainsi déplacée en translation tout en changeant de niveau. Cet équipement est particulièrement bien adapté à la manutention de fauteuils roulants transportant des personnes handicapées, puisque la plateforme est prévue pour être posée sur le sol pour recevoir le fauteuil et la plateforme change de niveau pour soulever le fauteuil et le placer via la plateforme dans le véhicule.

Cet équipement présente plusieurs inconvénients en particulier, de déposer la plateforme sur le sol, ce qui n'est pas ergonomique pour déposer une charge lourde transportée et déposée manuellement. De plus cet équipement est très compliqué du fait de la combinaison de mouvements nécessaires et par conséquent très onéreux à fabriquer.

L'invention a pour but de palier ces inconvénients en proposant un dispositif simplifié, ergonomique et peu onéreux permettant d'assurer un chargement d'objets lourds sur un plancher coulissant, sans effort particuliers, tout en apportant une assistance appréciable à l'utilisateur.

La présente invention est donc relative à un dispositif de plateforme coulissante extractible du plancher du véhicule pour déposer des objets lourds sans contrainte. Cette plateforme peut être aussi bien placée à l'arrière du véhicule que sur le coté latéral du véhicule.

A cet effet, la présente invention a pour objet un dispositif de plateforme coulissante placée sur le plancher de chargement de la caisse d'un véhicule **caractérisé en ce qu'il** comprend deux actionneurs aptes à accompagner le déplacement de la plateforme d'une position rétractée sur le plancher, à l'intérieur du véhicule vers une position extraite à l'extérieur du véhicule.

De façon avantageuse, les actionneurs sont des vérins à gaz.

Selon une caractéristique, les vérins à gaz sont disposés sensiblement verticalement de chaque côté de la plateforme.

Selon une autre caractéristique, les vérins à gaz sont raccordés par une chape et un axe sur l'extrémité de la plateforme.

Selon une autre caractéristique, la plateforme est maintenue à son extrémité avant par les deux vérins à gaz.

Avantageusement, les vérins à gaz sont raccordés par un mécanisme à rotule sur la paroi de la caisse du véhicule.

Selon une autre caractéristique avantageuse, les côtés latéraux de l'arrière de la plateforme sont équipés de deux jeux de galets.

Avantageusement, les côtés latéraux de l'arrière de la plateforme sont équipés de deux jeux de galets.

Selon une caractéristique avantageuse, la plateforme en position rétractée est en retrait par rapport à l'ouverture de l'encadrement d'une porte ou d'un hayon.

L'invention concerne également un véhicule comportant un dispositif de plateforme coulissante, ayant les caractéristiques susmentionnées.

D'autres caractéristiques d'un dispositif de plateforme coulissante conformément à l'invention, apparaîtront encore à travers la description qui suit de plusieurs exemples de réalisation donnés à titre indicatif et non limitatif en référence aux dessins annexés sur lesquels :
- La figure 1 est une vue en plan de côté d'un dispositif de plateforme coulissante en position rétractée sur le plancher d'un véhicule.
- La figure 2 est une vue en plan de côté d'un dispositif de plateforme coulissante en position déployée.

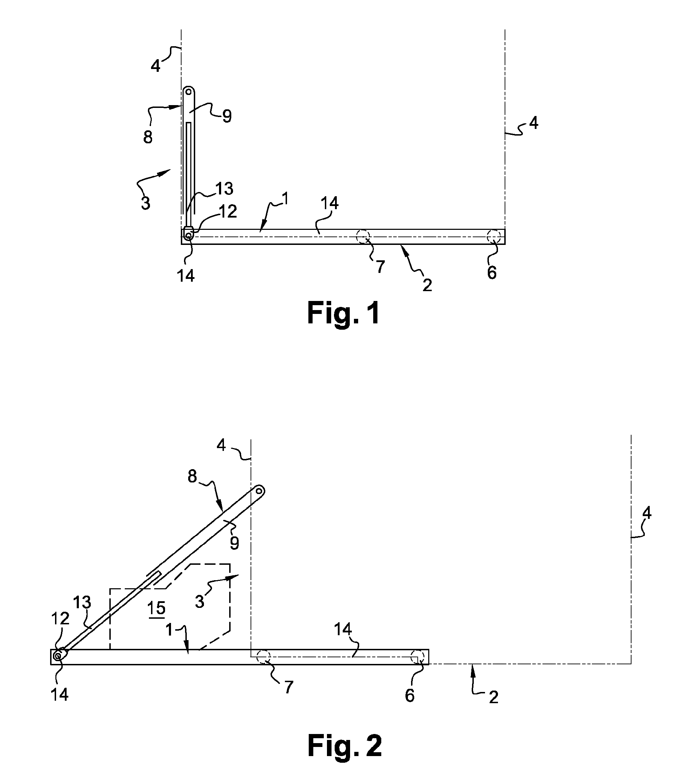

La figure 1 est une vue en plan de côté d'un dispositif de plateforme 1 coulissante en position rétractée disposée transversalement sur le plancher 2 d'un véhicule de type utilitaire. La plateforme 1 est prévue pour être extraite du véhicule sur un coté 3 de la carrosserie 4, représentée schématiquement en traits interrompus. En vis-à-vis de la plateforme 1 se trouve une porte coulissante (non représentée) qui permet de bloquer le déplacement de la plateforme 1 lorsque celle-ci est en position rétractée. La plateforme 1 comporte deux rails latéraux fixés sur le plancher 2 du véhicule. Deux galets 6, 7 sont solidaires et montés rotatifs de chaque côté de la plateforme 1. Un premier galet 6 est placé à l'arrière de la plateforme 1 et le second galet 7 à une distance comprise entre un tiers et la moitié de la distance par rapport au premier galet 6. Cette disposition permet à la plateforme 1 de s'extraire suffisamment sur le côté du véhicule pour y placer la charge à transporter. L'extrémité avant de la plateforme est soutenue par deux vérins 8 à gaz disposés sur le côté avant de la plateforme 1. Les vérins 8 à gaz sont montés verticalement le long de la paroi de la carrosserie du véhicule. L'extrémité supérieure du vérin est fixée par son corps 9 par un axe sur la carrosserie, tandis que l'extrémité inférieure du vérin est raccordée par une chape 12 du piston 13 sur un axe 14 solidaire du bord de la plateforme 1.

La figure 2 est une vue en plan de côté d'un dispositif de plateforme 1 coulissante en position déployée disposée pour recevoir une charge lourde 15 représentée en traits interrompus, pouvant être difficile à manipuler. Sur cette vue la plateforme est extraite sur une certaine longueur du plancher 2 de l'utilitaire. Le déploiement est limité par le galet 7 disposé à l'intérieur du rail de guidage qui vient en butée sur l'extrémité du rail fixé sur le plancher 2 du véhicule. Le vérin 8 à gaz est en position déployée et son axe est sensiblement à 45 degré par rapport à sa position initiale. Donc le vérin a fourni une assistance au déploiement de la plateforme 1, et soutient l'extrémité de la dite plateforme 1 se trouvant dans cette position en porte à faux. Lorsque la charge est déposée sur la plateforme 1, l'utilisateur repousse la plateforme 1 depuis son extrémité et le vérin 8 à gaz accompagne le mouvement, rendant le coulissement de la plateforme 1 fluide. L'utilisateur repousse la plateforme 1 en butée à l'intérieur du plancher 2 de l'utilitaire. La fermeture de la porte de préférence coulissante bloquant la plateforme 1 pour lui éviter tout mouvement latéral. Pour extraire la plateforme 1, l'utilisateur après ouverture de la porte pour dégager l'accès tire manuellement la plateforme 1 vers l'extérieur jusqu'à ce que l'angle d'attaque du vérin 8 à gaz soit suffisamment ouvert pour accompagner le mouvement d'extraction de la plateforme 1.
Bien entendu, il va de soi que l'invention ne se limite pas à l'exemple de réalisation plus spécialement décrit et représenté en référence aux dessins annexés ; elle en embrasse au contraire toutes les variantes.

## Revendications

1. - Dispositif de plateforme (1) coulissante placée sur le plancher (2) de chargement de la caisse d'un véhicule **caractérisé en ce qu'il** comprend deux actionneurs (8) aptes à accompagner le déplacement de la plateforme (1) d'une position rétractée sur le plancher (2), à l'intérieur du véhicule vers une position extraite à l'extérieur du véhicule.

2. - Dispositif de plateforme (1) coulissante selon la revendication 1, **caractérisé en ce que** les actionneurs (8) sont des vérins à gaz.

3. - Dispositif de plateforme (1) coulissante selon la revendication 2, **caractérisé en ce que** les vérins (8) à gaz sont disposés sensiblement verticalement de chaque côté de la plateforme (1).

4. - Dispositif selon l'une des revendications 1 ou 2, **caractérisé en ce que** les vérins (8) à gaz sont raccordés par une chape (12) et un axe (14) sur l'extrémité de la plateforme (1).

5. - Dispositif selon l'une quelconque des revendications précédentes, **caractérisé en ce que** la plateforme (1) est maintenue à son extrémité avant (16) par les deux vérins à gaz.

6. - Dispositif selon la revendication 5, **caractérisé en ce que** les vérins (8) à gaz sont raccordés par un mécanisme à rotule sur la paroi (4) de la caisse du véhicule.

7. - Dispositif selon l'une quelconque des revendications précédentes, **caractérisé en ce que** les côtés latéraux de l'arrière de la plateforme (1) sont équipés de deux jeux de galets (6), (7).

8. - Dispositif selon la revendication 7, **caractérisé en ce que** les galets (6), (7) se déplacent dans des rails fixés sur le plancher (2) du véhicule.

9. - Dispositif selon l'une quelconque des revendications précédentes, **caractérisé en ce que** la plateforme (1) en position rétractée est en retrait par rapport à l'ouverture de l'encadrement d'une porte ou d'un hayon.

10. - Véhicule comportant un dispositif de plateforme (1) coulissante selon l'une quelconque des revendications 1 à 9.
